# EUROPEAN PATENT APPLICATION

(11) **EP 1 940 191 A1**
(43) Date of publication of application: **02.07.2008**
(21) Application number: 06822024.3
(22) Date of filing: 17.10.2006
(51) Int. Cl.: H04Q 7/38, H04M 11/00

(54) **WIRELESS COMMUNICATION MODULE FOR MOBILE COMMUNICATION**

(30) Priority: 18.10.2005 JP 2005303392
(71) Applicant: Willcom, Inc., Tokyo 105-8477 (JP); NetIndex Inc., Tokyo, 1040031 (JP)
(72) Inventor: YASUJIMA, Nozomu, Tokyo 105-8477 (JP); KOBAYASHI, Kazuaki, Tokyo 105-8477 (JP); HANAZUKA, Takao, Tokyo 105-8477 (JP); KAWASAKI, Kenji, Tokyo 105-8477 (JP); KAWAI, Hiroshi, Tokyo 105-8477 (JP); FUNAYOSHI, Hideto, Tokyo 105-8477 (JP); FUKUMOTO, Junichi, Tokyo 105-8477 (JP); AKIYAMA, Tsukasa, Tokyo 104-0031 (JP)
(74) Representative: Leinweber & Zimmermann
(86) International application number: PCT/JP2006/321003
(87) International publication number: WO 2007/046525

(57) **Abstract**

To reduce costs of developing mobile communication terminals such as PHS communication terminals and facilitate development of mobile communication terminals by a manufacturer that does not have wireless communication technology. A new wireless communication module that is a separate small module comprising only wireless communication portion and a new terminal supporting the wireless communication module are proposed. The wireless communication module of the invention is used by being inserted to a corresponding slot of a terminal supporting the wireless communication module of the invention that has a configuration excluding wireless communication portion from a conventional mobile communication terminal. The present invention reduces burdens of development on terminal manufacturers. The invention also enables a manufacturer that does not have wireless communication technology to develop an original terminal.

## Description

### BACKGROUND OF THE INVENTION

### Field of the Invention

The present invention generally relates to a communication terminal apparatus, and more particularly, to a module having a miniatualized and independent wireless communication portion of a mobile communication terminal such as a PHS terminal.

### Related Background Art

Compared to mobile phones, terminals of Personal Handyphone System (PHS) have advantages in that they can realize clear voice quality, consume less electrical power, are suitable for miniaturization, and can be used as handsets for digital codeless phones. A PHS communication terminal for use in conventional PHS communication systems that supports both voice and data communication consists of an antenna, a transceiver, a modem for converting data to radio signal and vice versa, an A/D and a D/A converter that are necessary for controlling radio frequency (RF) unit, a channel codec for framing/deframing control signal necessary for communication and/or data, an ADPCM codec unit for applying ADPCM (Adaptive Differential Pulse Code Modulation) to voice signal, a CPU for communication processing control, ROM and RAM for storing programs and/or data, a timer necessary for controlling the CPU, UART (Universal Asynchronous Receiver Transceiver) and USB interfaces that are used for inputting/outputting data to and from external devices, a KEY interface necessary for key entry, an LCD or LED that can indicate operation status and/or communication information, an RF unit for converting 1.9 GHz band radio signal to baseband signal and vice versa, and the like. A PHS communication terminal designed specifically for data-only communication does not require the ADPCM codec unit because it does not handle voice signal, but requires a Personal Computer Memory Card International Association (PCMCIA) interface, CompactFlash (a registered trademark) interface, SD interface, or Universal Serial Bus (USB) interface for data communication with an external device such as a personal computer (PC).
In addition, it is now common to connect to a device other than a personal computer, such as a PDA, by means of a PHS communication terminal dedicated to data communication.
[Patent Document 1] Japanese Patent Application Laid-Open No. H9-312605
[Patent Document 2] Japanese Patent Application Laid-Open No. H8-279027
[Patent Document 3] Japanese Patent Application Laid-Open No. H7-234744
[Patent Document 4] Japanese Patent Application Laid-Open No. H9-149107

### SUMMARY OF THE INVENTION

Since such a conventional mobile communication terminal described above, e.g., a PHS communication terminal, has all components integrally incorporated into a single housing, every terminal needs to have a wireless communication portion that includes an antenna, transceiver, modem, ADPCM codec and so on. For terminal device manufacturers, development of parts for the wireless communication portion is a main factor in increasing development cost and also requires a long time period. In addition, for mobile communication terminals such as PHS communication terminals, it is difficult to maintain a certain quality level unless a performance test is carried out on each type of the mobile communication terminals developed. For a manufacturer that has technologies for developing various software programs for the mobile communication terminals but does not have radio interface technologies, it has been difficult to develop an original mobile communication terminal.
For users, even when a number of terminals are used by one user, each of the terminals has to have its own telephone number, which makes management by a user who has a plurality of terminals cumbersome. These disadvantages make it difficult to use many types of wireless terminals with various forms and functions freely.

Since the life cycle (a time period before release of a new model) of mobile communication terminals are short, users frequently purchase a terminal of a new model even through their terminals do no have any malfunction, and consequently, an old terminal becomes unusable after they change to a new terminal. Further, change of a mobile communication terminal involves operations of deleting telephone numbers from an old terminal and registering them to a new terminal.
There has also been a market requirement to perform voice communication like a conventional mobile phone when connecting a PHS communication terminal dedicated to data-only communication to a PDA.

To solve the above problems, the applicant proposes a new wireless communication module (also called "W-SIM" (Willcom SIM)) that is a separate small module comprising just a radio interface portion that is conventionally incorporated into a mobile communication terminal such as a PHS communication terminal. "SIM" is an abbreviation for "Subscriber Identity Module". The applicant also proposes a new terminal (hereinafter referred to as a "jacket" or "base unit") that accommodates the new wireless communication module of the invention. The wireless communication module of the invention (W-SIM) is used being inserted to a corresponding slot of a terminal (i.e., a jacket or base unit) supporting the wireless communication module that is a device excluding the radio interface portion of a conventional mobile communication terminal (e.g., a device that has a PCM codec, control unit, microphone, speaker, input device, display, battery and the like and has a necessary software and the like implemented thereon). Use of the module of the invention of compact design frees communication device manufacturers from burden of developing parts associated with the radio interface and enables them to focus on development of software and the like and enhancement of terminal (jacket) functions in a shorter development time. Companies or organizations that do not have radio interface technologies will be able to develop original terminals (i.e., jackets). In addition to terminals of conventional forms, home electrics, furniture, vehicles, and/or stuffed animals that have necessary components and a slot for the wireless communication module of the invention can be used as mobile communication terminals.

When a user has a plurality of jackets, the user can do equivalent of model change for a conventional mobile communication terminal by inserting the wireless communication module of the invention to a desired one of the jackets, thus a user with little technical knowledge can change models easily. Unlike a conventional terminal that is discarded as it is no longer used after a user changes to a new terminal, the wireless communication module of the invention can be an earth-friendly product that eliminates the need for discard if the module is used in common as a standard device.

### BRIEF DESCRIPTION OF THE DRAWINGS

FIG. 1 is a block diagram showing an exemplary configuration of the wireless communication module (W-SIM) of the invention;
FIG. 2 shows the appearance of the wireless communication module 100 of the invention;
FIG. 3A shows the appearance of a terminal (jacket) 300 that accommodates the wireless communication module of the invention;
FIG. 3B is a block diagram specifically showing the state in which the wireless communication module is inserted to the jacket 300 of FIG. 3A;
FIG. 4A shows the appearance of the jacket 400 that supports the wireless communication module of the invention;
FIG. 4B is a block diagram specifically showing the state in which the wireless communication module is inserted to the jacket 400 of FIG. 4A;
FIG. 5 shows an example of arrangement of an internal antenna in the wireless communication module of the invention;
FIG. 6 is a sequence diagram illustrating operations for Short Message Service;
FIG. 7A is a sequence diagram for when a jacket with the wireless communication module inserted therein is turned on;
FIG. 7B is a sequence diagram for when the wireless communication module is inserted to a jacket for which transmission power state is configured beforehand;
FIG. 7C is a sequence diagram for when the wireless communication module is inserted to a jacket for which transmission pause state is not set beforehand;
FIG. 8A is a sequence diagram for the wireless communication module of the invention and a jacket in open search;
FIG. 8B is a sequence diagram for the wireless communication module of the invention and a jacket when one confirms his own telephone number;
FIG. 9 is a block diagram of the wireless communication module that has an external antenna terminal;
FIG. 10 is a sequence diagram for when the wireless communication module of the invention obtains time information from a base station during packet communication, informs the jacket and makes time correction; and
FIG. 11 is a view relating to the design of a substrate for mounting a wireless communication module and its main substrate in the invention.

### DESCRIPTION OF THE PREFERRED EMBODIMENTS

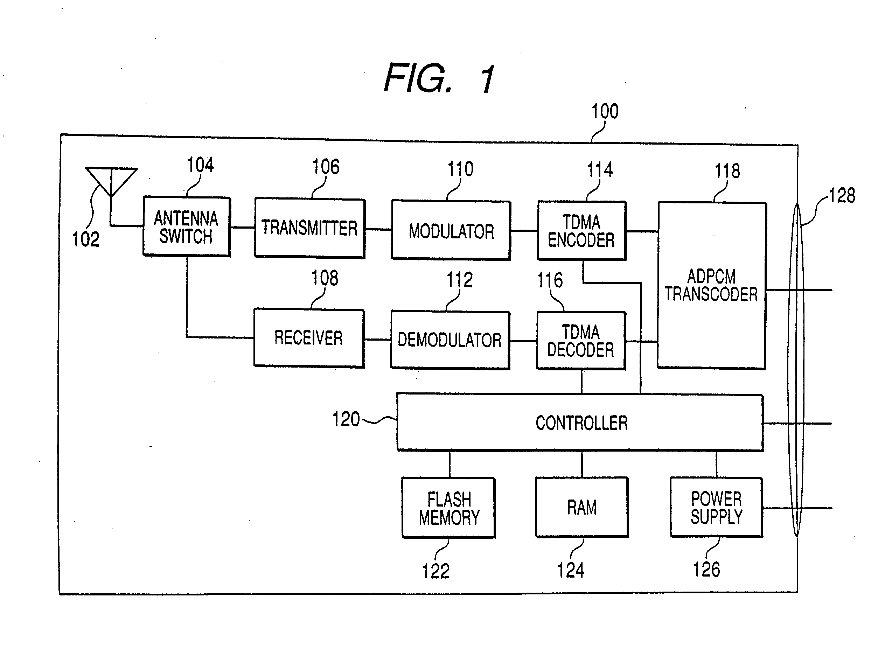

An exemplary configuration of the wireless communication module of the invention proposed by the applicant is illustrated in FIG. 1. The embodiment of FIG. 1 is the wireless communication module of the invention for PHS. Although various embodiments will be described herein for application of the invention to PHS, the invention is also applicable to systems that employ other communication techniques such as conventional mobile phone systems in addition to PHS. The wireless communication module 100 shown in FIG. 1 includes an antenna 102, an antenna switch 104, a transmission unit 106, a reception unit 108, a modulation unit 110, a demodulation unit 112, a time division multiple access (TDMA) encoding unit 114, a TDMA decoding unit 116, an ADPCM transcoder 118, a control unit 120, flash memory 112, random-access memory (RAM) 124, a PS 126, and an interface unit 128. As can be seen, the wireless communication module 100 of FIG. 1 includes every components of the radio interface portion of a conventional PHS communication terminal and is a multi-function communication module with versatility, e.g., it can store user data such as a phonebook in the flash memory 122.

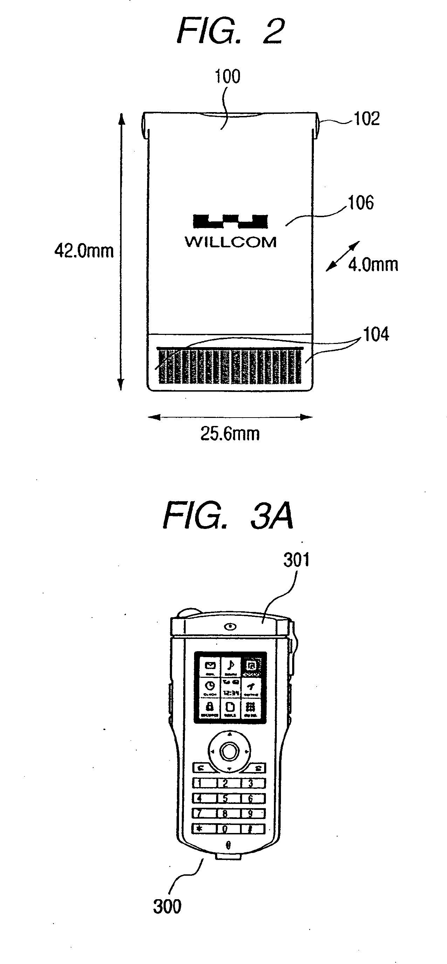

The appearance of a prototype of the wireless communication module 100 is shown in FIG. 2. As an example of its specific size, the module 100 here is 25.6 mm wide, 42.0 mm long, and 4.0 mm deep; it is very compact compared to a conventional PCMCIA card (e.g., AH-H407P from Net Index of 54.0 mm wide, 85.6 mm long, and 5.0 mm deep).

As shown in FIG. 2, the wireless communication module of the invention has a handle portion 102 that is formed of protrusion of the upper end in width direction. This can indicate a portion appropriate as a handle to a user and can prevent the user from inserting the wireless communication module to a slot of a jacket in the reverse direction. Ease of grasp is also realized by using rubber or thermoplastic elastomer and the like on the handle portion 102 to make it feel soft. In addition, as shown in FIG. 2, guides 104 are provided on both sides of pins on the wireless communication module of the invention so that pin terminals themselves are exposed as little as possible. Further, as shown in FIG. 2, on the wireless communication module of the invention, a logo mark 106 is printed on the same side as the pins. The wireless communication module of the invention employs a short antenna such as a dielectric chip antenna and the antenna is contained in the opposite side of the module shown in FIG. 2, but the position of the antenna cannot be seen externally. To prevent degradation of radio wave radiation characteristic, the wireless communication module should be inserted into a jacket when used such that the side on which the antenna is contained is away from the user's head (i.e., is on the back side of the jacket). Indication of a logo mark as in the invention can allow a user to recognize that the side on which pins are arranged is the front side and prompt the user to insert the module with the front side facing the user. Consequently, when the wireless communication module is being inserted into a jacket, the antenna will be positioned away from the user, thereby attaining the above object.

Considering the possibility that the pins of the wireless communication module 100 and interface connector pins are misaligned due to variation of environmental temperature or humidity, manufacturing error, or deterioration over time, the pins of the wireless communication module 100 of the invention need to be arranged at intervals of about 1.1 mm, for example. Although it is generally known that a portable phone having a width above 50 mm feels large when one holds it in his/her hand, it is possible to design a terminal without such bulkiness by spacing the interface pins about every 1.1 mm.

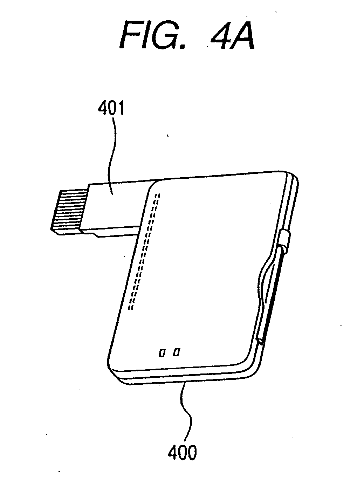

Also, as the wireless communication module of the invention is about 4 mm deep, thinner than the conventional PCMCIA card, antenna can be contained in the module yet the module can be inserted to a USB-enabled adapter, which will be discussed below and shown in FIG. 4A, and/or a standard PCMCIA card adapter.

FIGS. 3A and 4A show examples of terminals (jackets) that support the wireless communication module of the invention. A jacket 300 shown in FIG. 3A is a device that is configured by excluding the radio interface portion such as shown in FIG. 1 from a conventional PHS communication terminal for voice communication and data communication, having an interface for connecting to the wireless communication module and a slot into which the wireless communication module of the invention is inserted. The jacket 300 has a cap 301 for covering the slot for inserting the wireless communication module, and to insert the wireless communication module, the user removes the cap to expose the slot and inserts the wireless communication module into it, and closes the cap to use them. In addition to mechanically guarding the slot for inserting the wireless communication module, the cap also serves as an antenna radome for keeping radiation characteristic of the internal antenna positioned at the upper end of the wireless communication module within a predetermined range in various usage environments. By inserting the wireless communication module 100 into the corresponding slot provided on the jacket 300, the module 100 can be used for both voice communication and data communication like a conventional PHS communication terminal.

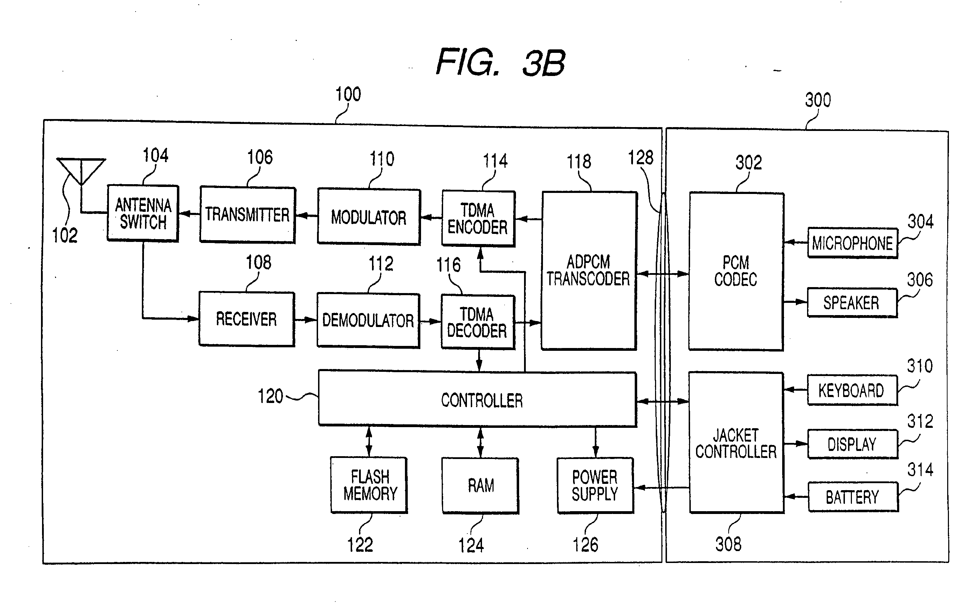

FIG. 3B shows a block diagram which specifically illustrates the state in which the wireless communication module of the invention is inserted in the jacket. The wireless communication module 100 is connected with the jacket 300 via the interface 128. Arrows in FIG. 3B indicate directions of signal flow. When the jacket 300 with the wireless communication module 100 inserted therein is used like a typical PHS communication terminal that provides both voice communication and data communication, the user's voice is input to the PCM codec 302 via the microphone 304 and converted to digital data through pulse code modulation. The interface 128 has 18 pins (i.e., signal lines). Specifically, seven pins: TXD (transmit serial data), RXD (receive serial data), RTS (transmitted data ready), CTS (transmission ready), DTR (ready to receive), DCD (data carrier detected), and RI (ring indicator) are used as UART (Universal Asynchronous Receiver Transmitter) serial interface for exchange of control data and data in data communication, four pins: PCM clock signal (PCMCLK), PCM synchronization signal (PCMSYNC), PCM input signal (PCMIN) and PCM output signal (PCMOUT) are used for communicating voice signals, INS (detection signal) is used for recognizing insertion of the wireless communication module of the invention, two signals, Power Supply (Vcc) and Ground (GND), are used for power supply to the wireless communication module and grounding, three pins are used for indicating electric field strength (antenna indication) on an external display device such as an LCD and LED on the jacket by means of signals for electric field strength (DISP1, DISP2 and DISP3), and a signal for interface notification (IF_SEL) is used for checking whether a pin is of UART or of another scheme when the pin originally used in UART is made available in another data transfer scheme other than UART. Voice data encoded by a PCM codec 302 is input to the ADPCM transcoder in the wireless communication module 100 via one of the four pins and converted to ADPCM-modulated data. Output signal from the ADPCM transcoder 118 is code-converted to baseband signal for time division multiple access (TDMA) (114), and further converted to modulated wave of 1.9 GHz band by the modulation unit 110 and transmission unit 106 and wirelessly transmitted to a base station via the antenna switch 104 and the antenna 102. On the other hand, data input by the user on an input device such as a keyboard 310 of the jacket 300 is input to a jacket control unit 308, and further input to the control unit 120 of the wireless communication module 100 via a pin as UART serial interface of the interface 128. The data signal is input to the TDMA encoding unit 114 and then, similarly to voice signal, wirelessly transmitted to the base station via the modulation unit 110, transmission unit 106, antenna switch 104 and antenna 102.

Wireless signal transmitted from the base station is received by the antenna 102 and then inputted to the reception unit 108 by the antenna switch. After the received signal (of 1.9 GHz band, for example) is amplified and frequency-converted at the reception unit 108 and demodulated into TDMA baseband signal at the demodulation unit 112, ADPCM voice signal or data signal can be obtained by the TDMA decoding unit 116. The ADPCM voice signal is input to the ADPCM transcoder 118 to be converted to PCM voice signal. The PCM voice signal is further input to the PCM codec 302 of the jacket 300 via a voice signal pin of the interface 128 and converted to analog signal to be output via the speaker 306. The user can hear the output voice. On the other hand, data signal input from the TDMA decoding unit 116 to the control unit 120 is input to the control unit 308 of the jacket 300 via the UART pin of the interface 128, and shown on the display 312 provided on the jacket 300 on the user's demand.

The flash memory 122 contained in the wireless communication module of the invention stores specific information such as the telephone number, Personal Identify Number (PIN) and Personal Unblock Key (PUK) of the wireless communication module and data for a phonebook, and the RAM 124 is used for temporarily storing control data and/or transmitted/received data.

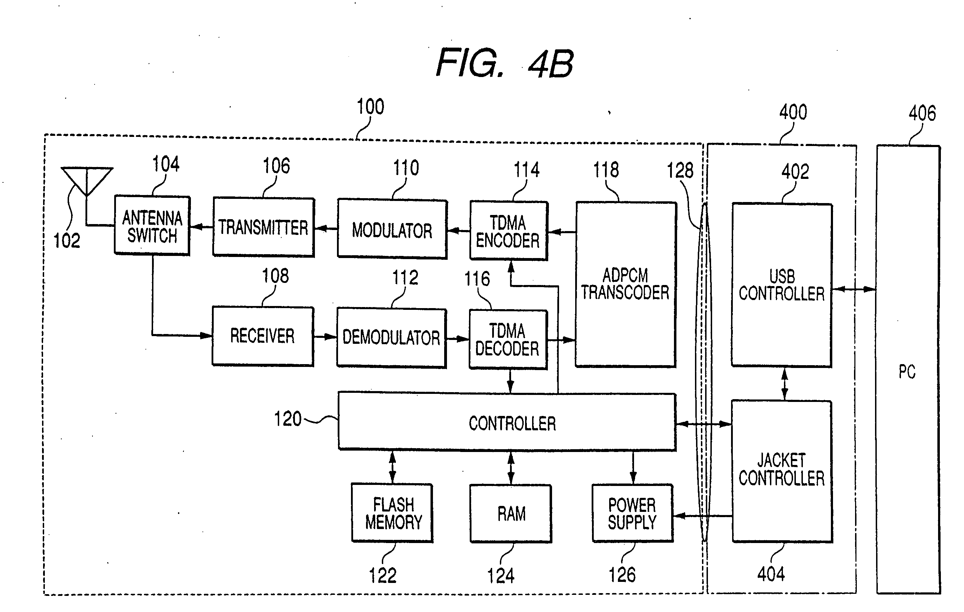

A jacket 400 of another form shown in FIG. 4A has a configuration which eliminates the radio interface portion such as shown in FIG. 1 from a conventional PHS card for data communication, having a slot to which the wireless communication module 100 is inserted and a USB interface 401 for connecting to a PC and the like. By inserting the wireless communication module 100 into the slot provided on the jacket 400, the module can be used for data communication like a conventional PHS card. A block diagram specifically showing the state in which the wireless communication module is inserted in the jacket 400 is illustrated in FIG. 4B. The wireless communication module 100 and the jacket 400 are connected to each other via the interface 128. Operations between the wireless communication module 100 and the jacket 400 including exchange of data signals are similar to data signal communication shown in FIG. 3B. The jacket 400 further exchanges data with a PC and the like connected to the jacket 400 via the USB control unit 402 and the USB interface.

Use of the wireless communication module of the invention allows an independent module having a radio interface to be inserted to various terminals having various functions and the terminal can be used as a PHS communication terminal that is capable of wireless communication. Thus, the wireless communication module having the configuration shown in FIG. 1 can be utilized in various manners as required by users' needs.

The wireless communication module of the invention and corresponding various types of jackets provide the capability to confirm if the wireless communication module is being inserted in the jacket. To be specific, the present invention employs pin "INS", one of 18 interface pins provided by the wireless communication module, as a signal line for confirming insertion. For example, the jacket control unit 308 can determine whether the wireless communication module is now inserted or not by making voltage on the signal line when the wireless communication module 100 is not inserted in the jacket 300 of FIG. 3A assume a value different from that for when the wireless communication module 100 is inserted in the jacket 300. Based on a result of detection, the jacket control unit 308 informs the user whether the wireless communication module is being inserted or not through indication on the display 312.

With the wireless communication module and the jacket proposed by the applicant, one cannot visually see whether a wireless communication module is inserted or not externally when a wireless communication module is completely inserted to the jacket and the jacket cap is closed. By adopting the arrangement of the embodiment, the user can readily notice the absence of the wireless communication module when the wireless communication module of the invention has been removed.

Assume that the wireless communication module 100 of the configuration shown in FIG. 3B is removed from a jacket and inserted to another jacket, and the jacket is newly used as a telephone. Such a case involves operations of moving data stored in the first jacket (e.g., phonebook data) to the flash memory 122 of the wireless communication module once, pulling the wireless communication module out of the first jacket and inserting it to another jacket, and moving the data stored in the flash memory 122 of the wireless communication module to the new jacket. When the user pulls out the wireless communication module during data exchange between the wireless communication module and the jacket, data stored in memory might be corrupted. To solve this problem, with the jacket of the invention, when it is confirmed through signal lines, INS, TXD, RXD, RTS, CTS, DCD and RI that the wireless communication module of the invention is being mounted, that the jacket itself is performing the process of entering data transfer mode, and that data is going to be transmitted from the wireless communication module in response to instructions from the jacket, and when the jacket control unit 308 recognizes that data is being exchanged, the user is informed that data is being exchanged with indication on the display 312, for example.

For a typical UART (serial) interface, a baud rate of 230.4 kbps or 115.2 kbps is generally used. On the other hand, baud rates used in a typical PHS communication system of 1.9 GHz band that can be generated from 19.2 MHz clock signal are of different values such as 240 kbps and 120 kbps. Accordingly, if typical baud rates such as 230.4 kbps and 115.2 kbps are used for UART interface, a clock generator needs to be additionally provided. Such a configuration will have problems of increased power consumption due to the added clock generator and an increased size of the wireless communication module. To solve the problems, the wireless communication module of the invention employs baud rates that can be generated from the clock signal of a PHS system, such as 240 kbps and 120 kbps, as baud rates used for UART interface. This eliminates the need to add another clock generator, thereby allowing reduction of power consumption as well as the size of the wireless communication module.

Since it is assumed that a data rate faster than 240 kbps will be required in future as serial communication speed between the wireless communication module of the invention and a jacket with the increasing rate of a radio link layer, speed switching is implemented using IF_SEL pin of interface 128. Describing with the example of FIG. 3B, the control unit 120 of the wireless communication module detects the data communication rate in a radio link layer and switches to a serial communication speed corresponding to the detected speed for communicating data to the jacket 300, for example.

Due to errors that are caused during a radio link layer, clear voice cannot be obtained just by decoding and reproducing voice data that was subject to ADPCM processing. To address this, in the configuration of FIG. 3B for example, error correction process such as interpolation processing and mute processing for improving voice call quality needs to be performed in the jacket 300 in general. In this case, however, it is necessary to additionally provide a pin for communicating error information from the wireless communication module 100 to the jacket 300, and consequently, the wireless communication module would become larger in size and more difficult to generally apply to small jackets. Also, since error correction process is performed on the jacket 300, the CPU of the jacket needs to be always operating, which leads to problems of increased power consumption and/or decreased continuous calling time. In addition, to minimize time delay caused by error correction, a relatively fast CPU needs to be specially used for error correction. Consequently, jackets would be expensive. It would be also difficult for a manufacture that does not have technologies relevant to error correction to engage in development of jackets.

To overcome these disadvantages, in the configurations of the wireless communication module of the invention and the jacket, ADPCM voice data received by the wireless communication module is first converted into PCM voice signal that includes errors by the ADPCM transcoder. The signal is processed by an error correction processing circuit in the wireless communication module into PCM voice signal that has auditorily improved quality. The PCM voice signal is further decoded into original voice signal of improved quality by the PCM codec of the jacket. The wireless communication module also has a µ-law conversion unit, at which the voice signal having improved quality is µ-law converted. The interface of the wireless communication module has a pin (i.e., a signal line) for µ-law, and µ-law converted voice signal is input via this pin to the µ-law codec of the jacket at which it is decoded into original voice signal to be output via the speaker.

Since correction of errors caused during a radio link layer is all done on the wireless communication module in the arrangements of the wireless communication module of the invention and the jacket, there are no need to provide a pin for error information notification in the interface, no need to have the CPU of the jacket always operate for error correction, no need to use an expensive CPU in the jacket, and no need for a manufacture that develops jackets to have technologies associated with error correction. In PHS voice communication, voice call quality is improved by correction means using a known technique because voice call quality is degraded with increase of error rate. Further, even if wireless communication modules supporting a new audio encoding technique such as a half rate will be developed in future, design change for jackets will not be necessary by continuing to use µ_law for an interface between wireless communication modules and jackets. Consequently, jacket manufacturers can focus on designing functions of jackets themselves without a burden of new developments associated with data modulation techniques. For users, it is possible to purchase only a wireless communication module of a new scheme and continue to use a favorite jacket without buying new one, which can provide more flexible usage than conventional one-piece PHS communication terminals or the wireless communication module and the jacket shown in FIG. 3B.

The wireless communication module proposed by the applicant contains an antenna therein (e.g., a dielectric chip antenna) and thus has a problem of noise floor being increased by electromagnetic noise emitted by other devices in the wireless communication module.

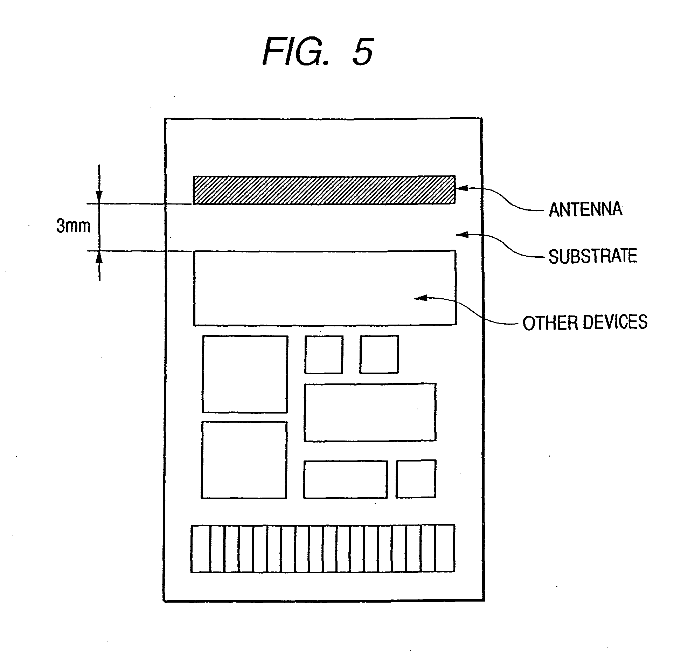

FIG. 5 illustrates the positional relationship between the antenna and other devices in the wireless communication module. Knowledge that was obtained through experiments by the applicant proved that the distance of at least 3 mm between the antenna and other devices can keep noise floor emitted by the devices below a practically required level.

A Personal Identity Number (PIN) and a Personal Unblock Key (PUK) are stored in the flash memory (122) in the wireless communication module of the invention, and a program for authentication using those personal numbers is stored in ROM (Read-Only Memory) not shown. When the wireless communication module is inserted in a jacket or a jacket is turned on with the wireless communication module inserted in it, power is supplied to the wireless communication module, causing the program to operate to transmit a predetermined signal to the jacket via one of UART signal lines and prompt the user to input the PIN on the display, for example. After the user inputs a wrong PIN more than a predetermined number of times, the program locks the operation of the wireless communication module, preventing the user from using the wireless communication module unless the user inputs the correct PUK on the jacket. This can keep the confidentiality of data in the wireless communication module and prevent theft by a malicious another person even if an another person tries to insert another user's wireless communication module to another jacket and use it.

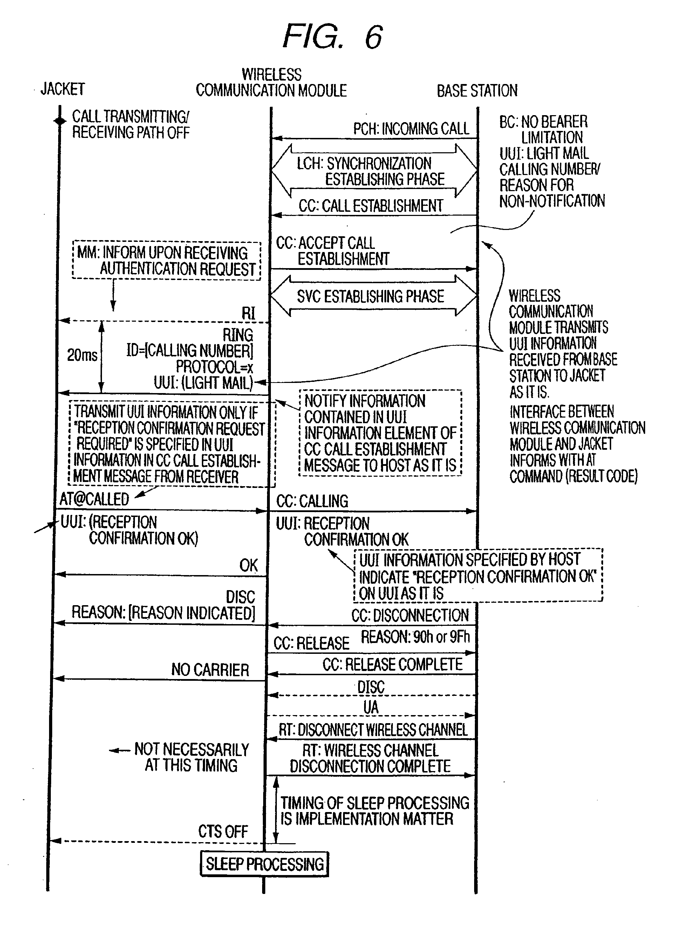

The current PHS communication system provides a service called Short Message Service that allows users to exchange relatively short messages between telephones. When the wireless communication module of the invention receives data such as User to User Interface (UUI) to which character information is added, sub-address and facility that are exchanged on a radio link in the Short Message Service, it passes the data to the jacket as it is via the interface without applying any additional processing to the data. By employing this arrangement, Short Message Service can be utilized even in a country that adopts a different scheme for using data such as UUI, sub-address and facility in Short Message Service by inserting the wireless communication module of the invention to a jacket that supports the scheme used in that country and using them. When Short Message Service is deployed domestically and abroad, it is generally required to adopt one common scheme in all countries, but the arrangement of the invention eliminates this need. FIG. 6 is a sequence diagram illustrating operations for Short Message Service. The communication process between the wireless communication module and the base station is prescribed in the PHS communication scheme. The wireless communication module passes information received from the base station such as UUI to which character information is added, sub-address, and facility to the jacket by way of a UART pin. The jacket recognizes the information such as UUI received from the wireless communication module as character information and has the information appear on the display such as an LCD.

The wireless communication module of the invention has the capability to stop radio wave emission instantly (radio-stop mode) without turning off the power switch. This radio-stop mode capability is especially convenient in a situation in which the emission of radio wave from the wireless communication module is undesirable such as on a train or outside a PHS service area. When the user instructs the radio-stop mode by operating the jacket (e.g., by pressing a button for transmission pause provided on the jacket), the jacket control unit recognizes the instruction and communicates an AT command for the radio-stop mode to the control unit of the wireless communication module via a pin for control signal among UART signal lines of the interface. The control unit of the wireless communication module recognizes that the AT command indicates the radio-stop mode, and controls the antenna switch (104), transmission unit (106), modulation unit (110), and TDMA encoding unit (114) to suspend their operations. Such radio-stop mode capability is not provided by current wireless data communication cards, helping solution of the above problems as well as reduction of power consumption. For example, when one is outside a PHS service area, his/her terminal would typically search for a nearby base station periodically and perform transmission for registering its location at full power to thereby consume electric power every time such an operation occurs. Such power consumption can be reduced by applying the arrangement of the embodiment.

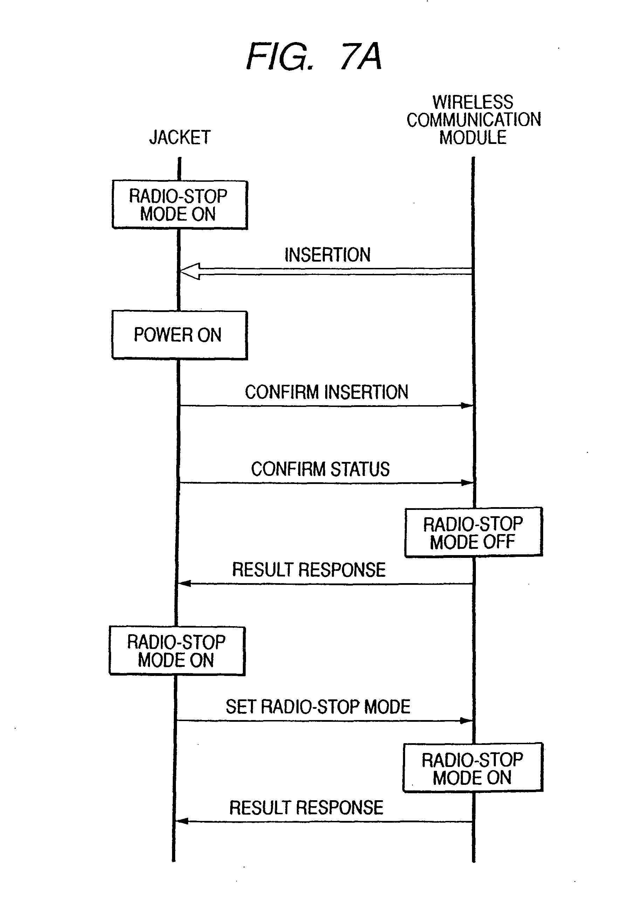

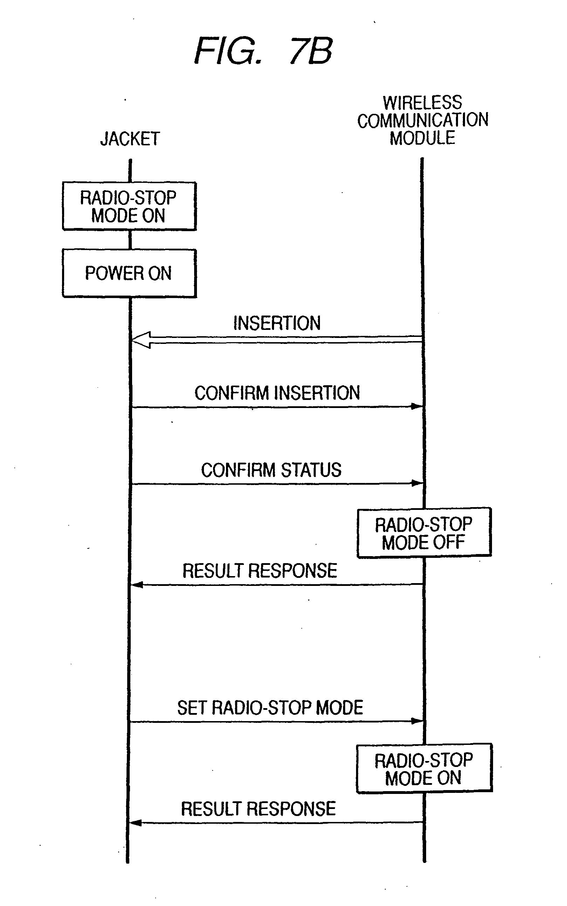

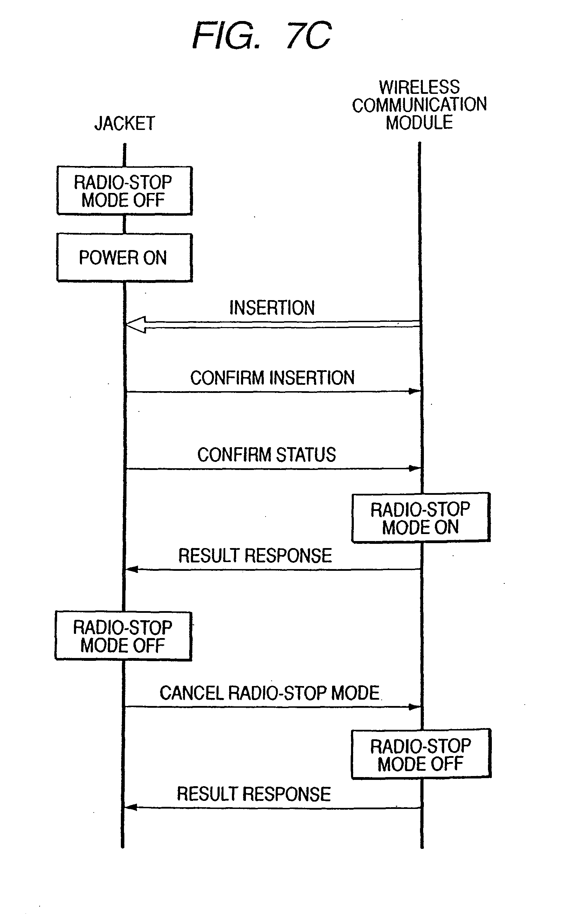

A sequence diagram for when a jacket is turned on with the wireless communication module of the invention inserted therein, a sequence diagram for when the wireless communication module is inserted to a jacket whose radio-stop mode is set in advance, and a sequence diagram for when the wireless communication module is inserted to a jacket whose radio-stop mode is not set in advance are shown in FIG. 7A, 7B and 7C, respectively.

As already mentioned, the wireless communication module of the invention has a pin as UART interface for communicating data signals and control signals and a pin as PCM interface for communicating voice signals separately. Therefore, the UART interface pin as well as the PCM interface pin can be used when the wireless communication module of the invention is inserted to a voice communication-capable jacket to perform voice communication. The jacket of the invention has a key for open search, for example, and when voice quality degrades during a voice call, pressing the key can cause the jacket control unit to pass an AT command for open search to the wireless communication module control unit via the UART interface pin to search for a new base station. Also, as mentioned above, the wireless communication module of the invention stores user data such as a phonebook in its internal storage device. Thus, when one wants to confirm his/her own telephone number during a voice call, he/she can obtain necessary data from the wireless communication module via the UART signal line and view it on the display of the jacket while continuing the voice call. Since an interface signal line for data signal and one for control signal are common in a conventional data communication card that uses PCMCIA interface, a control signal as described above cannot be sent even when call quality degrades during data communication. For this reason, with a conventional data communication card, data exchange needs to be stopped once and command mode needs to be entered. As can be understood, the wireless communication module of the invention can provide the functions of the embodiment by having a new structure in which interface for voice communication and interface for data communication and control are independently provided in the interface between the wireless communication module and the jacket.

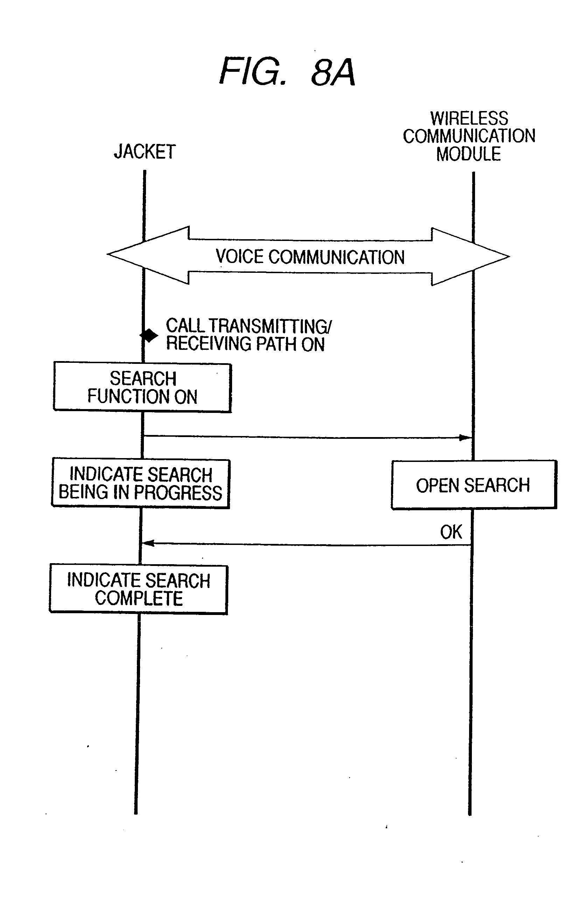

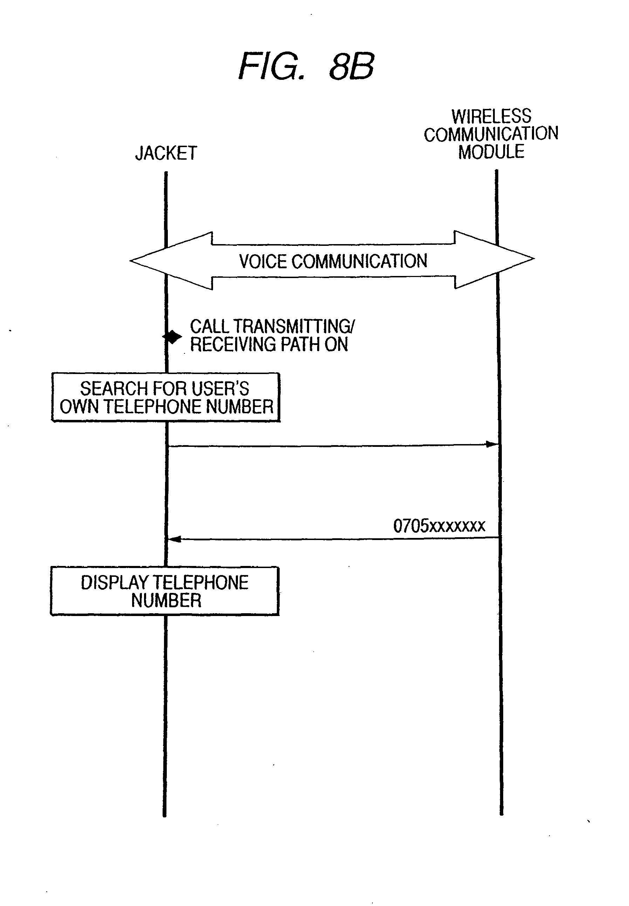

A sequence diagram during open search and a sequence diagram for when the user confirms his/her own telephone number are shown in FIGS. 8A and 8B, respectively.

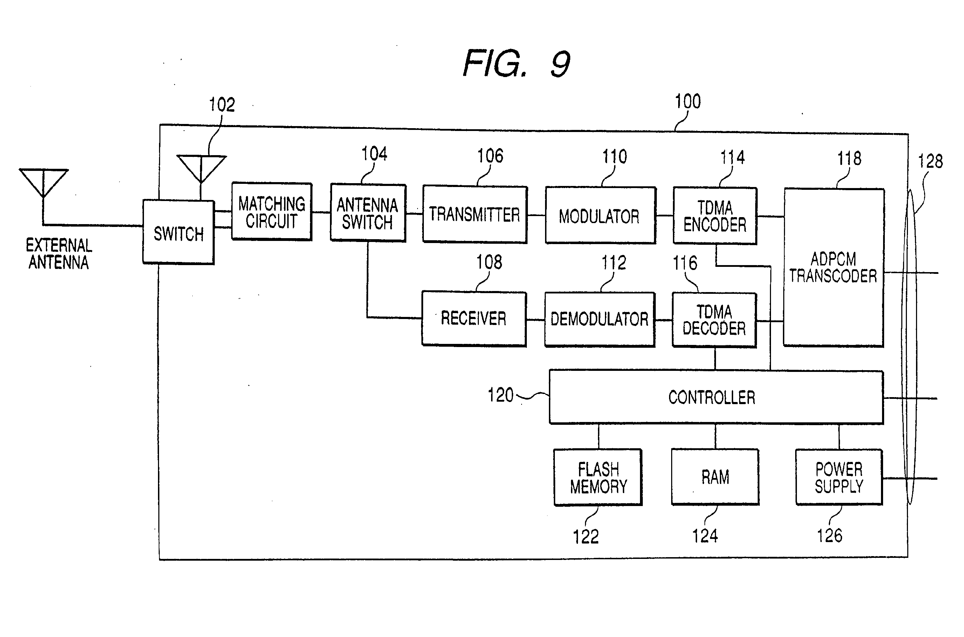

The wireless communication module of the invention has an antenna terminal in it as shown in FIG. 9. As mentioned above, the wireless communication module of the invention contains an internal antenna and the internal antenna is used to perform communication in normal use. On the other hand, when an external antenna is used rather than the internal antenna such as when a jacket has an antenna, the external antenna can be used via an internal antenna terminal by using the wireless communication module of the invention that has a hole on the case close to the antenna terminal. Also, by selecting from these antennas with a switch appropriately, a space diversity system can be constructed in a manner known to those skilled in the art.

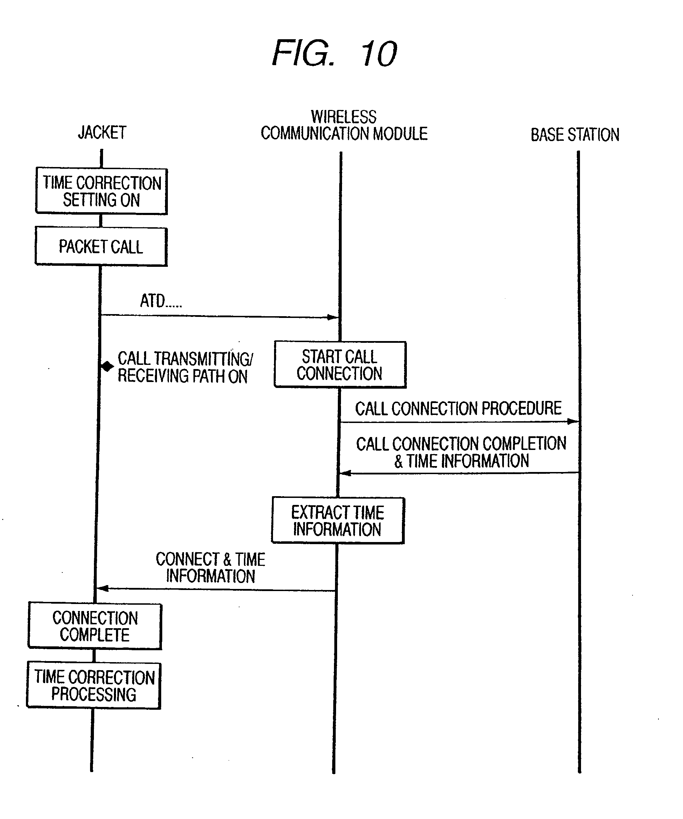

The wireless communication module and the jacket are capable of performing time correction for the jacket based on time information obtained from a base station. A sequence diagram for this arrangement is shown in FIG. 10. Since time information can be obtained from a base station during packet communication, the wireless communication module sends an AT command for time correction to the jacket control unit via the UART signal line based on the time information. The jacket control unit recognizes the AT command to correct clock time in the jacket.
In addition to during packet communication, such clock time correction may be performed by sending an AT command to the jacket based on the time information contained in some kind of information when the information sent from a base station is received.

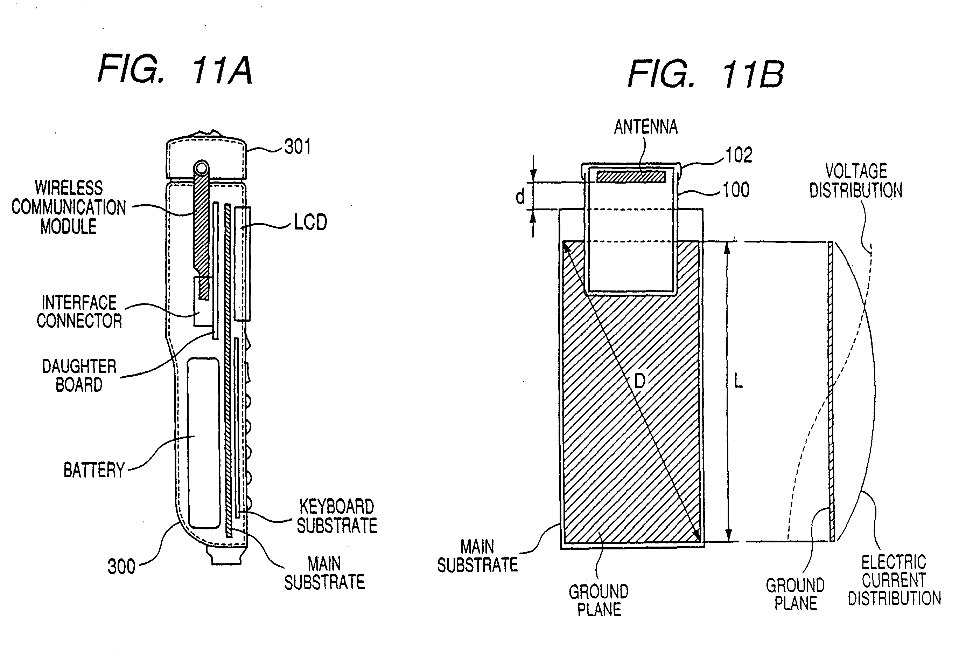

FIG. 11 shows an embodiment in which the wireless communication module (100) is slotted into the jacket (300). On the front side of the main substrate (i.e., the side on which the jacket 300 is operated and the display is provided), a keyboard, an LCD panel and the like as user interfaces are implemented, and on the back side, there is a daughter board that includes an interface connector to the wireless communication module. The wireless communication module slotted into the jacket is connected with the main board via the interface connector provided on the daughter board. The positional relationship among these components, the jacket main body (300) and the cap (301) is such that the antenna provided in the upper end of the wireless communication module is positioned almost at the center of a cavity that is formed by the cap 301 in its inside so that the cap 301 functions as an antenna radome sufficiently. According to the applicant's knowledge, the dimension of the cavity needs to be at least 5 mm, preferably about 10 mm, relative to each orientation of dielectric chip antennas of 1.9 GHz band. Also, as shown in FIG. 11B, the distance between the upper end of the main board and the antenna in the wireless communication module is configured to be at least a distance d. The distance d is configured to be at least 5 mm, preferably 10 mm, in PHS communication that uses 1.9 GHz band in order to reduce noise from the main board and secure antenna radiation characteristic. The applicant's knowledge that was obtained from experiments showed that the dimension of solid ground plane formed on the main board significantly affects the antenna radiation characteristic of the wireless communication module. That is, when the longitudinal dimension L or the diagonal dimension D of the solid ground plane on the main board shown in FIG. 11B is equal to an integral multiple of a half-wave length of transmitted/received radio wave, its resonance effect negatively affects the radiation characteristic and directivity of the antenna of the wireless communication module. This is because, for example, when the longitudinal dimension L of solid ground plane is equal to a half-wave length, there will be voltage and current distributions as shown in FIG. 11B on the solid ground plane due to electromagnetic wave radiated by the antenna of the wireless communication module, and consequently, new resonance elements disturbs antenna radiation characteristic. Actually, antenna radiation efficiency as measured by 3 m method was 16.4% when the ground plane dimension L is approximately a half-wave length, whereas antenna radiation efficiency was improved to 26.6% when the dimension L was increased by 25%. Thus, it was found that antenna radiation characteristic can be improved to be within an acceptable range by making the longitudinal dimension L and the diagonal dimension D of solid ground plane on the main board differ from a half-wave length by at least 12.5%, more preferably 25%. That is, since a half-wave length represents about 7.9 cm in a PHS system that uses 1.9 GHz band, it is required to meet conditions that the longitudinal dimension L and the diagonal dimension D are at least 6.9 cm or less, or 8.9 cm or more, more preferably, 5.9 cm or less, or 9.9 cm or more.

As already mentioned, the wireless communication module of the invention can be used being inserted to a variety of jackets. Accordingly, since antenna radiation characteristic affected by the form or material of a jacket's housing and/or noise floor level caused by the jacket vary from insertion to one jacket to another, reception performance of the wireless communication module when inserted can vary. In this case, handover determination criteria for determining whether to start handover from a base station with which the wireless communication module is now communicating to another base station in proximity will vary from jacket to jacket. To address such circumstances, the wireless communication module of the invention is capable of knowing the type of the jacket with which the module is now being connected through negotiation between the wireless communication module and the jacket that is performed when the wireless communication module is inserted to the jacket or the jacket with the wireless communication module inserted therein is powered on. For example, when the wireless communication module is inserted to a jacket that is already turned on and power is supplied to the wireless communication module, an AT command is exchanged between the control unit of the wireless communication module and that of the jacket via the UART signal line and they give information on them to each other. The wireless communication module control unit can identify the type of the jacket from the AT command sent by the jacket control unit to the wireless communication module control unit.

The wireless communication module of the invention stores information on wireless operation algorithms corresponding to various jacket types in its internal storage device, so that it can select an algorithm appropriate for the type of a jacket with which the module is now being connected and use the algorithm for actual wireless operation. For example, the wireless operation algorithms stored in the wireless communication module include settings of the values of electric field strength of the radio wave received from a base station and the error rate of received data at which a handover operation should be started. The wireless communication module measures the electric field strength of the received radio wave and the error rate of the received data at the control unit 120 via the antenna 102, reception unit 108, demodulation unit 112 and TDMA decoding unit 116. The wireless communication module continually monitors received electric field strength and error rate of received data, and when these values are below predetermined levels corresponding to the jacket with which the module is now connected, the module determines that its current position is getting away from the base station to which it is connected and starts a handover operation. An algorithm best suited for a jacket that is stored in the storage of the wireless communication module will be actually obtained with a technique of determining a handover determination criterion that is based on electric field strength and error rate that ensure communication quality acceptable for combination of the wireless communication module and the jacket.

That is, for a jacket that is less prone to error (that is, a jacket with a low noise floor level), it is not necessary to activate a handover operation even if electric field strength is relatively weak. However, for a jacket more prone to error (i.e., a jacket with a high noise floor level), handover needs to be activated at a higher electric field strength than a jacket less prone to error. A handover determination criterion for a jacket can be determined by storing beforehand a plurality of handover determination criterion tables that are based on combinations of electric field strengths and error rates in ROM (not shown) of the wireless communication module and selecting an appropriate combination from the handover determination criterion tables according to a jacket type that is notified through negotiation described above. The handover determination criterion tables can also be updated by storing a specified value from a network in the flash memory (122) in the wireless communication module by means of OVER THE AIR (OTA) technique known to those skilled in the art.

The wireless communication module of the invention is configured to inform the user that the electric field strength of received radio wave has weakened when the module detects it by sounding jacket alarm, for example. Unlike conventional data communication cards that do not provide such function, as it is also contemplated that the wireless communication module of the invention will be used being inserted to any jacket that supports either voice or data communication, this function is added in consideration of its operation as a telephone. As mentioned in the embodiment 14, the control unit of the wireless communication module of the invention monitors electric field strength of radio wave received by the wireless communication module. When measured electric field strength is below a predetermined level, the control unit of the wireless communication module sends an AT command indicating that electric field strength has weakened (i.e., the module is coming closer to outside a PHS service area) to the jacket control unit via the UART signal line. The jacket control unit recognizes the situation from the AT command and outputs a predetermined alarm sound from a speaker. As already mentioned, since the wireless communication module of the invention and the jacket have separate voice communication interface and data communication interface, serial signal lines for data communication can be used during voice communication. Therefore, functions of the embodiment can be effectively provided during voice communication as well.

The wireless communication module of the invention has the function of automatically detecting the baud rate of a jacket. That is, at the initial negotiation between the wireless communication module and a jacket, the jacket sends a predetermined AT fixed word to the wireless communication module at a baud rate specific to the jacket. There are eight baud rates, 2,400, 4,800, 9,600, 19,200, 38,400, 57,600, 120,000, and 240,000 bps, for UART interface supported by the wireless communication module, and the wireless communication module determines the baud rate at which the jacket sent the fixed AT word and fixes the subsequent baud rate at the determined baud rate. This method enables jackets having various usages to specify baud rates optimal for them by themselves.

A typical PHS communication terminal would enter virtual connection state (i.e., sleep mode) called dormant state when there is no more data packet to transmit during packet communication. For example, in such a situation, a current PHS data communication card makes it appear to be continuously connected in application layer, whereas in physical layer, transmission and reception of data packets is paused and virtual connection state is entered. With the configurations of the wireless communication module and the jacket proposed by the applicant, when they have entered virtual connection state, the wireless communication module can recognize that it is not communicating but the jacket cannot recognize it. Consequently, the CPU of the jacket continues to operate, which can increase power consumption. To address this, with the arrangement of the invention, when the wireless communication module has transitioned to virtual connection state during packet communication, the wireless communication module control unit issues an AT command to the jacket via the UART signal line to inform the jacket that they are now in virtual connection state. Since all components are incorporated to one housing in a conventional integrated PHS voice terminal, such a terminal can immediately recognize that it is not transmitting data and is in virtual connection state. However, the arrangement of the invention requires this function because the wireless communication module for wireless communication is separate from a jacket that provides other functions. While a current data communication card cannot prevent power consumption by a PC when in virtual connection state (i.e., sleep mode) because the PC cannot recognize it, the invention can inhibit increase of overall power consumption by allowing the jacket as well as the wireless communication module to enter sleep mode by means of the arrangement described above.

When the wireless communication module and a jacket that have been in virtual connection state needs to perform some wireless communication via the wireless communication module in response to a user's operation on the jacket, the jacket control unit issues an AT command to the control unit of the wireless communication module and they return from virtual connection state to normal operation mode to resume communication. Similarly, when the wireless communication module and a jacket that have been in virtual connection state receive a signal from a base station, the signal serves as a trigger to bring the wireless communication module back to normal mode first, and an AT command issued by the wireless communication module causes the jacket to return to normal mode as well.

While the embodiments of the invention have been described in detail with reference to a PHS communication system, it will be apparent to those skilled in the art that specific configurations are not limited to those embodiments but embodiments that use other communication systems than PHS and/or modification of design within the spirit of the invention are also encompassed within the technical range of the invention.

## Claims

1. A wireless communication module for mobile communication that is detachably slotted into an apparatus having a corresponding slot with a portion of said wireless communication module positioned outside said slot and operates as a mobile communication terminal together with said apparatus, comprising:
an internal antenna transmitting and receiving radio signals;
an interface circuit transmitting and receiving encoded voice signals and data signals to and from said apparatus;
a first conversion unit converting encoded voice signals and data signals received from said apparatus via said interface circuit into signals of a format that is appropriate for wireless communication via said internal antenna;
a second conversion unit converting radio signals received via said internal antenna into encoded voice signals and data signals of a format that is appropriate for communication with said apparatus via said interface circuit; and
a control unit transmitting and receiving said data signals to and from said apparatus via said interface circuit.

2. The wireless communication module according to Claim 1, wherein said control unit detects a data communication speed in a radio link layer, and switches to a speed corresponding to said detected speed using one of signal lines that constitute said interface circuit to perform communication with said apparatus.

3. The wireless communication module according to Claim 1, further comprising an error correction unit correcting errors that are caused in a radio link layer.

4. The wireless communication module according to Claim 1, further comprising
a storage unit that has stored therein a Personal Identity Number (PIN), a Personal Unblock Key (PUK), and an authentication program, wherein
when said wireless communication module is inserted to said apparatus, or when said apparatus is powered on with said wireless communication module inserted therein, said authentication program causes said wireless communication module to
transmit a signal for prompting a user to input a PIN to said apparatus;
allow operation of said wireless communication module if a correct PIN is input by the user via said apparatus;
lock the operation of said wireless communication module if a wrong PIN is input by the user via said apparatus more than a predetermined number of times; and
not allow the operation of said wireless communication module unless a correct PUK is input by the user via said apparatus.

5. The wireless communication module according to Claim 1, wherein said wireless communication module is used in a wireless communication system that provides Short Message Service, and said wireless communication module sends received data relating to Short Message Service to said apparatus via said interface circuit in the same format as it is received.

6. The wireless communication module according to Claim 1, wherein signal lines for transmitting and receiving encoded voice signals are separate from signal lines for transmitting and receiving data signals in said interface circuit.

7. The wireless communication module according to Claim 1, further comprising an antenna terminal.

8. The wireless communication module according to Claim 1, further comprising a storage unit that has stored therein one or more wireless operation algorithms, wherein said wireless communication module selects and uses an algorithm appropriate for said apparatus from said one or more wireless operation algorithms in response to a signal received from said apparatus that indicates the type of said apparatus.

9. The wireless communication module according to Claim 1, wherein when strength of radio wave received via said internal antenna is below a predetermined level, said wireless communication module sends an alert signal indicating it to said apparatus.

10. The wireless communication module according to Claim 1, wherein said wireless communication module automatically detects a baud rate used by said apparatus.

11. An apparatus for mobile communication having a slot, a wireless communication module having an internal antenna being detachably slotted into said slot with a portion of said wireless communication module positioned outside said slot, said apparatus operating as a mobile communication terminal together with said module, comprising;
an interface circuit transmitting and receiving encoded voice signals and data signals to and from said wireless communication module;
a voice input device;
a voice output device;
a data input device;
a data output device;
a first unit decoding encoded voice signals received from said wireless communication module via said interface circuit, and encoding voice signal received from said voice input device to send the encoded voice to said wireless communication module; and
a second unit presenting via said data output device data that is included in data signals received from said wireless communication module via said interface circuit, and for sending via said interface circuit data signals that include data received via said data input device to said wireless communication module.

12. The apparatus according to Claim 11, wherein said apparatus is configured to be able to transmit/receive a command or data to and from said wireless communication module via said interface circuit during a telephone call.

13. An apparatus for mobile communication, having a slot for detachably slotting a wireless communication module having an internal antenna with a portion of said wireless communication module positioned outside said slot, said apparatus operating as a mobile communication terminal for data communication together with said wireless communication module, comprising:
a first interface circuit for transmitting and receiving data signals to and from said wireless communication module;
a second interface circuit transmitting and receiving data signals to and from an external device; and
a conversion unit converting data signals received from said wireless communication module via said first interface circuit into data signals of a format appropriate for communication with an external device via said second interface circuit, and converting data signals received from an external device via said second interface circuit into data signals of a format appropriate for communication with said wireless communication module via said first interface circuit.

14. A mobile communication terminal that consists of a wireless communication module and an apparatus having a corresponding slot, said wireless communication module being detachably slotted into said slot with a portion of said wireless communication module positioned outside said slot, said wireless communication module comprising:
an internal antenna transmitting and receiving radio signals;
an interface circuit transmitting and receiving encoded voice signals and data signals to and from said apparatus;
a first conversion unit converting encoded voice signals and data signals received from said apparatus via said interface circuit into signals of a format that is appropriate for wireless communication via said internal antenna:
a second conversion unit converting radio signals received via said internal antenna into encoded voice signals and data signals of a format that is appropriate for communication with said apparatus via said interface circuit; and
a control unit transmitting and receiving said data signals to and from said apparatus via said interface circuit,
said apparatus comprising:
an interface circuit for transmitting and receiving encoded voice signals and data signals to and from said wireless communication module;
a voice input device;
a voice output device;
a data input device;
a data output device;
a first unit decoding encoded voice signals received from said wireless communication module via said interface circuit, and for encoding voice received via said voice input device to send the same to said wireless communication module; and
a second unit presenting via said data output device data that is included in data signals received from said wireless communication module via said interface circuit, and for sending via said interface circuit data signals that include data received via said data input device to said wireless communication module.

15. The mobile communication terminal according to Claim 14, wherein said control unit detects a data communication speed in a radio link layer, and switches to a speed corresponding to said detected data speed using one of signal lines that constitute interface circuit of said wireless communication module and said apparatus to perform communication between said wireless communication module and said apparatus.

16. The mobile communication terminal according to Claim 14, wherein said wireless communication module further comprises a storage unit that has stored therein a Personal Identity Number (PIN), a Personal Unblock Key (PUK), and an authentication program, and
when said wireless communication module is inserted to said apparatus, or when said apparatus is powered on with said wireless communication module inserted therein, said authentication program causes said wireless communication module to
transmit a signal for prompting a user to input a PIN to said apparatus;
allow operation of said wireless communication module if a correct PIN is input by the user via said apparatus;
lock the operation of said wireless communication module if a wrong PIN is input by the user via said apparatus more than a predetermined number of times; and
not allow the operation of said wireless communication module unless a correct PUK is input by the user via said apparatus.

17. The mobile communication terminal according to Claim 14, wherein said mobile communication terminal is used in a wireless communication system that provides Short Message Service, and said mobile communication terminal sends received data relating to Short Message Service from said wireless communication module to said apparatus via said interface circuit in the same format as it is received.

18. The mobile communication terminal according to Claim 14, wherein said mobile communication terminal is configured to be able to transmit/receive a command or data during a telephone call via said interface circuit of said wireless communication module and said apparatus.

19. The mobile communication terminal according to Claim 14, wherein when electric field strength received via said internal antenna is below a predetermined level, said wireless communication module sends an alert signal indicating it to said apparatus, and
said apparatus informs to a user that the user is approaching outside a service area in response to said alert signal received.

20. A mobile communication terminal that consists of a wireless communication module and an apparatus having a corresponding slot, said wireless communication module being detachably slotted into said slot with a portion of said wireless communication module positioned outside said slot,
said wireless communication module comprising:
an internal antenna transmitting and receiving radio signals;
an interface circuit transmitting and receiving encoded voice signals and data signals to and from said apparatus;
a first conversion unit converting encoded voice signals and data signals received from said apparatus via said interface circuit into signals of a format that is appropriate for wireless communication via said internal antenna;
a second conversion unit converting radio signals received via said internal antenna into encoded voice signals and data signals of a format that is appropriate for communication with said apparatus via said interface circuit; and
control unit transmitting and receiving said data signals to and from said apparatus via said interface circuit,
said apparatus comprising:
a first interface circuit transmitting and receiving data signals to and from said wireless communication module;
a second interface circuit transmitting and receiving data signals to and from an external device;
a conversion unit converting data signals received from said wireless communication module via said first interface circuit into data signals of a format appropriate for communication with an external device via said second interface circuit, and for converting data signals received from an external device via said second interface circuit into data signals of a format appropriate for communication with said wireless communication module via said first interface circuit.
